# EUROPÄISCHE PATENTSCHRIFT

(11) **EP 2 744 320 B1**
(45) Veröffentlichungstag und Bekanntmachung des Hinweises auf die Patenterteilung: **26.02.2020**
(21) Anmeldenummer: 12740576.9
(22) Anmeldetag: 25.07.2012
(51) Int. Cl.: B60D 1/24, A01B 59/041

(54) **STABILISATOR FÜR EINEN UNTERLENKER EINES DREIPUNKTGERÄTEANBAUS EINES TRAKTORS**
STABILIZER FOR A LOWER LINK OF A THREE-POINT HITCH OF A TRACTOR
STABILISATEUR POUR BARRE D'ATTELAGE INFÉRIEURE D'UN ATTELAGE TROIS POINTS DE TRACTEUR

(30) Priorität: 19.08.2011 DE 102011081274
(43) Veröffentlichungstag der Anmeldung: 25.06.2014
(73) Patentinhaber: Deere & Company, Moline, IL 61265 (US); JRS GmbH & Co. KG, 85119 Ernsgaden (DE)
(72) Erfinder: SAUERMANN, Hans, 85119 Ernsgaden (DE); HEITLINGER, Martin, 76684 Östringen (DE)
(74) Vertreter: Dehnhardt, Florian Christopher
(86) Internationale Anmeldenummer: PCT/EP2012/064588
(87) Internationale Veröffentlichungsnummer: WO 2013/026646

(56) Entgegenhaltungen:
- EP-A1- 1 342 399
- EP-A1- 1 905 289
- EP-A1- 2 468 083
- EP-A1- 2 468 083
- EP-A2- 2 232 973

## Beschreibung

Die Erfindung betrifft einen Stabilisator für einen Unterlenker eines Dreipunktgeräteanbaus eines Traktors, mit einem ersten Stabilisatorglied und einem gegenüber dem ersten Stabilisatorglied entlang einer gemeinsamen Längsachse federnd gelagerten zweiten Stabilisatorglied, wobei sich die beiden Stabilisatorglieder zum Zwecke der Verstellung der Gesamtlänge des Stabilisators in Bezug auf die gemeinsame Längsachse zueinander verdrehen lassen. Des Weiteren ist ein mit dem ersten Stabilisatorglied verbundenes Sperrmittel vorgesehen, das zur Einschränkung einer zwischen den beiden Stabilisatorgliedern auftretenden Federbewegung in eine vorgegebene Sperrstellung verbringbar ist.

Ein derartiger Stabilisator für einen Unterlenker eines Dreipunktgeräteanbaus eines Traktors ist beispielsweise aus der DE 602 00 422 T2 bekannt. Der zwischen Traktor und Unterlenker gelenkig angebrachte Stabilisator umfasst ein erstes Stabilisatorglied sowie ein gegenüber dem ersten Stabilisatorglied federbeweglich angeordnetes zweites Stabilisatorglied. Ein an dem ersten Stabilisatorglied schwenkbar angelenktes Sperrmittel in Gestalt einer Sperrklappe dient der gegenseitigen Verriegelung der beiden Stabilisatorglieder, wozu eine in dem Sperrmittel vorgesehene Ausnehmung mit einem an dem zweiten Stabilisatorglied ausgebildeten nasenförmigen Vorsprung derart in Eingriff gebracht werden kann, dass eine zwischen den Stabilisatorgliedern auftretende Federbewegung unterbunden wird. Zusätzlich lassen sich die beiden Stabilisatorglieder gegeneinander verdrehen, um eine manuelle Verstellung der Gesamtlänge des Stabilisators zu ermöglichen. Ein an dem zweiten Stabilisatorglied schwenkbar angeordneter Federbügel umgreift in einer entspannten Ruhestellung einen an dem ersten Stabilisatorglied hervorspringenden Ansatz derart, dass ein Verdrehen der beiden Stabilisatorglieder und damit eine unbeabsichtigte Verstellung der Gesamtlänge arretiert werden kann.

Ein weiterer Stabilisator mit den Merkmalen des Oberbegriffs des Anspruchs 1 ist aus der EP 2 468 083 A1 bekannt.

Die EP 1 905 289 zeigt noch einen ähnlichen Stabilisator, welcher einen üblichen Federbügel aufweist.

Schließlich zeigt die EP 2 232 973 A2 ein anderes Konzept von Sperrmittel, welches keine Ausnehmungen im Sinne des Oberbegriff des Anspruchs 1 aufweist.

Aufgrund der durch das Vorhandensein der Sperrklappe eingeengten Anordnungsmöglichkeiten des Ansatzes am zweiten Stabilisatorglied ist eine Arretierung des Stabilisators von vornherein auf einige wenige Stellungen zwischen erstem und zweitem Stabilisatorglied beschränkt.

Es ist daher Aufgabe der vorliegenden Erfindung, einen bezüglich seiner Verstellbarkeit verbesserten Stabilisator für einen Unterlenker eines Dreipunktgeräteanbaus eines Traktors anzugeben.

Diese Aufgabe wird durch einen Stabilisator mit den Merkmalen des Patentanspruchs 1 gelöst.

Der erfindungsgemäße Stabilisator für einen Unterlenker eines Dreipunktgeräteanbaus eines Traktors umfasst ein erstes Stabilisatorglied und ein gegenüber dem ersten Stabilisatorglied entlang einer gemeinsamen Längsachse federnd gelagertes zweites Stabilisatorglied, wobei sich die beiden Stabilisatorglieder zum Zwecke der Verstellung der Gesamtlänge des Stabilisators in Bezug auf die gemeinsame Längsachse zueinander verdrehen lassen. Des Weiteren ist ein mit dem ersten Stabilisatorglied verbundenes Sperrmittel vorgesehen, das zur Einschränkung einer zwischen den beiden Stabilisatorgliedern auftretenden Federbewegung in eine vorgegebene Sperrstellung verbringbar ist. Das zweite Stabilisatorglied weist einen bezüglich der gemeinsamen Längsachse rotationssymmetrisch ausgebildeten Verriegelungskragen auf, der bei in der vorgegebenen Sperrstellung befindlichem Sperrmittel in eine in dem Sperrmittel angeordnete Ausnehmung derart eingreift, dass eine zwischen den beiden Stabilisatorgliedern auftretende Ein- und Ausfederbewegung unterbunden wird. Um einer unbeabsichtigten Verstellung der Gesamtlänge des Stabilisators vorzubeugen, ist das zweite Stabilisatorglied gegenüber dem ersten Stabilisatorglied mittels eines Sicherungsmittels arretierbar, wobei das Sicherungsmittel einen Federbügel umfasst, der in eine am Umfang des Verriegelungskragens vorgesehene Aussparung eingreift bzw. gepresst wird. Der Federbügel lässt sich entgegen einer rückstellenden Federkraft von Hand aus der Aussparung herausschwenken, sodass der Verriegelungskragen freigegeben wird. Eine am ersten Stabilisatorglied angeordnete Befestigungslasche dient der Halterung des Federbügels. Die Befestigungslasche weist zwei in Richtung der gemeinsamen Längsachse beabstandete Querbohrungen auf, wobei jeder der beiden Querbohrungen ein offenes Ende des Federbügels aufnimmt.

Genauer gesagt weist der Verriegelungskragen die Gestalt einer entlang der Außenseite des zweiten Stabilisatorglieds ringförmig umlaufenden Ausbuchtung auf. Aufgrund der Rotationssymmetrie des Verriegelungskragens lässt sich die Aussparung an jeder beliebigen Stelle entlang der Ausbuchtung vorsehen. Insbesondere ist es möglich, eine Vielzahl derartiger Aussparungen gleichmäßig nebeneinander anzuordnen, sodass sich der Stabilisator bei angebrachtem Anbaugerät feinstufig verspannen und anschließend arretieren lässt.

Vorteilhafte Ausführungen des erfindungsgemäßen Stabilisators gehen aus den Unteransprüchen hervor.

Vorzugsweise ist das Sperrmittel als Sperrklappe ausgebildet, wobei die Sperrklappe mittels eines quer zur gemeinsamen Längsachse des Stabilisators verlaufenden Scharnierbolzens schwenkbar mit dem ersten Stabilisatorglied verbunden ist. Die Sperrklappe ist über eine Zuglasche mittels einer Spiralfeder oder dergleichen derart mit einer entsprechenden Befestigungsstelle am Traktor verbindbar, dass diese beim Anheben der Unterlenker selbsttätig in die vorgegebene Sperrstellung geschwenkt wird.

Die Sperrklappe kann das erste Stabilisatorglied in der vorgegebenen Sperrstellung zumindest teilweise umschließen, sodass ein zusätzlicher Schutz vor Verschmutzungen gegeben ist. Die als Guss- oder Schmiedeteil gefertigte Sperrklappe weist insbesondere die Form einer das erste Stabilisatorglied zumindest teilweise umgreifenden bzw. umkragenden Halbschale auf. Die Halbschale läuft einenends in zwei gegenüberliegende Scharnierlaschen aus, mittels derer eine schwenkbare Verbindung mit dem ersten Stabilisatorglied herstellbar ist. Anderenends sind zwei gegenüberliegende Wangen vorgesehen, von denen jede eine separate Ausnehmung zur Ineingriffnahme des Verriegelungskragens aufweist, wobei die beiden Wangen auf ihrer Innenseite derart ausgeformt sind, dass diese an dem zweiten Stabilisatorglied im Bereich des Verriegelungskragens zumindest abschnittsweise anliegen.

Zur Herstellung einer traktorseitigen Gelenkverbindung kann das erste Stabilisatorglied ein Kugelauge umfassen. Das Kugelauge besteht aus einer in einem Befestigungsbereich des ersten Stabilisatorglieds ausgeformten Befestigungsöse sowie einer darin drehbar gelagerten Befestigungskugel, die eine räumliche Bewegung des Stabilisators gegenüber dem Traktor erlaubt.

Weiterhin kann das zweite Stabilisatorglied einen Befestigungsschenkel zur Herstellung einer Gelenkverbindung mit einem Unterlenker eines Dreipunktgeräteanbaus umfassen. Der Befestigungsschenkel weist eine an dem Unterlenker anbringbare Befestigungsgabel auf, wobei die mittels der Befestigungsgabel mit dem Unterlenker herstellbare Gelenkverbindung gegenüber der traktorseitigen Gelenkverbindung derart senkrecht angelenkt ist, dass der Stabilisator sowohl horizontalen als auch vertikalen Auslenkungen des Unterlenkers folgen kann.

Vorzugsweise greift ein innerhalb des zweiten Stabilisatorglieds ausgebildetes Innengewinde an einem an dem Befestigungsschenkel ausgebildeten Außengewinde derart ein, dass der Stabilisator durch Verdrehen des zweiten Stabilisatorglieds gegenüber dem ersten Stabilisatorglied bezüglich seiner Gesamtlänge verstellbar ist. Auf diese Weise lässt sich die Stellung der Unterlenker flexibel an die Abmessungen unterschiedlicher Anbaugeräteschnittstellen anpassen.

Hierbei besteht die Möglichkeit, dass zur Drehbetätigung des zweiten Stabilisatorglieds eine Werkzeugaufnahme vorgesehen ist. Die Werkzeugaufnahme kann eine Vielzahl von zur Aufnahme eines Maulschlüssels vorgesehene Abflachungen aufweisen, sodass durch Umsetzen des Maulschlüssels selbst unter beengten Platzverhältnissen eine problemlose Drehbetätigung des zweiten Stabilisatorglieds möglich ist.

Zur Erleichterung einer manuellen Betätigung des Federbügels weist dieser an seinem freien Ende einen ösenförmig aufgeweiteten Griffbereich auf. Die rückstellende Federkraft ist derart bemessen, dass einerseits eine zuverlässige Arretierung des zweiten Stabilisatorglieds gewährleistet ist, andererseits eine werkzeuglose Betätigung des Federbügels möglich bleibt. Der Federbügel ist beispielsweise aus einem rostfreien oder in entsprechender Weise oberflächenvergüteten Runddraht gefertigt.

Die Aussparung weist insbesondere die Gestalt einer schlitzförmigen Vertiefung auf, die in Richtung einer zwischen dem ersten Stabilisatorglied und dem zweiten Stabilisatorglied auftretenden Federbewegung orientiert ist. Die schlitzförmige Vertiefung ist derart ausgebildet, dass diese ein an dem Federbügel vorgesehenes Arretiersegment vollständig aufnimmt. Da der Federbügel entlang der schlitzförmigen Vertiefung zu gleiten vermag, wird eine zwischen den beiden Stabilisatorgliedern auftretende Federbewegung nicht behindert.

Der erfindungsgemäße Stabilisator wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine perspektivische Ansicht eines Ausführungsbeispiels des erfindungsgemäßen Stabilisators für einen Unterlenker eines Dreipunktgeräteanbaus eines Traktors,
- Fig. 2: eine Schnittdarstellung des in Fig. 1 wiedergegebenen Ausführungsbeispiels des erfindungsgemäßen Stabilisators, und
- Fig. 3: eine weitere perspektivische Ansicht des in Fig. 1 wiedergegebenen Ausführungsbeispiels des erfindungsgemäßen Stabilisators.

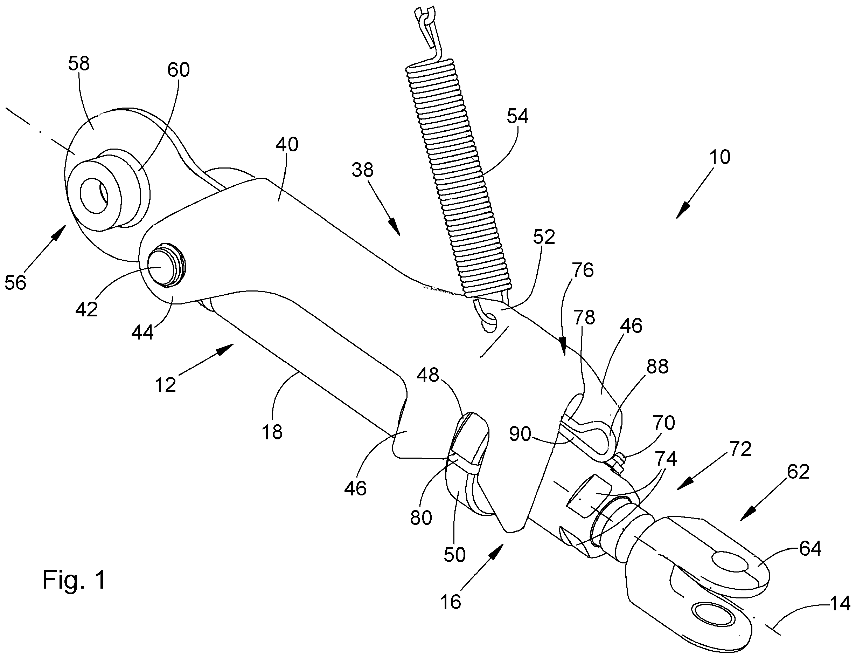

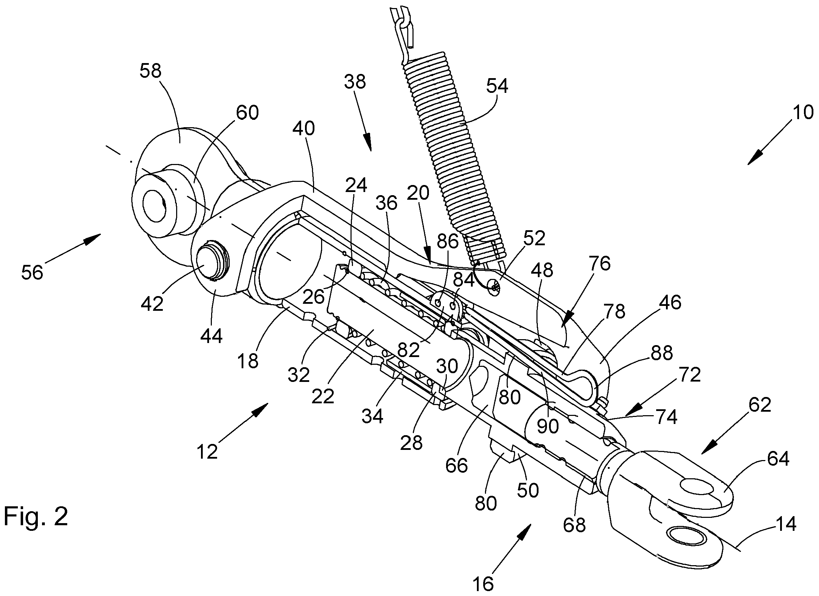

Fig. 1 zeigt eine perspektivische Ansicht eines Ausführungsbeispiels des erfindungsgemäßen Stabilisators für einen Unterlenker eines Dreipunktgeräteanbaus eines Traktors, wobei bezüglich konstruktiver Einzelheiten auf die Schnittdarstellung gemäß Fig. 2 verwiesen sei.

Der Stabilisator 10 umfasst ein erstes Stabilisatorglied 12 und ein gegenüber dem ersten Stabilisatorglied 12 entlang einer gemeinsamen Längsachse 14 federnd gelagertes zweites Stabilisatorglied 16, wobei sich die beiden Stabilisatorglieder 12 und 16 zum Zwecke der Verstellung der Gesamtlänge des Stabilisators 10 in Bezug auf die gemeinsame Längsachse 14 verdrehen lassen. Bei dem ersten Stabilisatorglied 12 handelt es sich um ein im Wesentlichen zylindrisches Stabilisatorgehäuse 18, innerhalb dessen das als Federkolben 20 ausgebildete zweite Stabilisatorglied 16 längsbeweglich geführt ist.

Der Federkolben 20 weist einen Kolbenabschnitt 22 mit reduziertem Durchmesser auf, an dem ein erster Anschlagring 24 in einem ersten Endbereich gleitend angebracht ist. Der erste Anschlagring 24 ist mittels eines Federrings 26, der in eine an dem Kolbenabschnitt 22 umfangsmäßig ausgebildete Nut eingreift, gesichert. Des Weiteren ist ein zweiter Anschlagring 28 in einem zweiten Endbereich gleitend angebracht. Der zweite Anschlagring 28 stützt sich an einem an dem Federkolben 20 ausgebildeten Kragen 30 ab. Ein in das Stabilisatorgehäuse 18 eingebrachter Sprengring 32 sowie ein Abstandshalter 34 dienen der Begrenzung einer an dem Federkolben 20 auftretenden Ein- und Ausfederbewegung. Zwischen den beiden Anschlagringen 24 und 28 erstreckt sich eine den Kolbenabschnitt 22 umgebende Schraubenfeder 36. Die Schraubenfeder 36 wird mittels der beiden Anschlagringe 24 und 28 derart komprimiert bzw. vorgespannt, dass der Federkolben 20 in eine in Fig. 2 gezeigte vorgegebene Ruhestellung gedrängt wird. Auf diese Weise ist eine Selbstzentrierung eines mit dem Stabilisator 10 ausgestatteten Unterlenkers möglich.

Es sei angemerkt, dass die Darstellung des ersten Stabilisatorglieds 12 als im Wesentlichen zylindrisches Stabilisatorgehäuse 18 lediglich beispielhaften Charakter hat. Vielmehr ist auch eine Vielzahl anderer Gehäuseformen denkbar.

Des Weiteren ist ein mit dem ersten Stabilisatorglied 12 verbundenes Sperrmittel 38 vorgesehen, das zur Einschränkung einer zwischen den beiden Stabilisatorgliedern 12 und 16 auftretenden Federbewegung in eine in Fig. 1 gezeigte vorgegebene Sperrstellung verbringbar ist. Das Sperrmittel 38 ist als Sperrklappe 40 ausgebildet, wobei die Sperrklappe 40 mittels eines quer zur gemeinsamen Längsachse 14 verlaufenden Scharnierbolzens 42 schwenkbar mit dem ersten Stabilisatorglied 12 verbunden ist.

Die als Guss- oder Schmiedeteil gefertigte Sperrklappe 40 weist die Form einer das erste Stabilisatorglied 12 zumindest teilweise umgreifenden bzw. umkragenden Halbschale auf. Die Halbschale läuft einenends in zwei gegenüberliegende Scharnierlaschen 44 aus, in denen miteinander fluchtende Bohrungen zur Aufnahme des Scharnierbolzens 42 und damit zur Herstellung der schwenkbaren Verbindung mit dem ersten Stabilisatorglied 12 ausgebildet sind. Anderenends sind zwei gegenüberliegende Wangen 46 vorgesehen, von denen jede eine separate gabelförmige Ausnehmung 48 zur Ineingriffnahme eines dem zweiten Stabilisatorglied 16 zugeordneten Verriegelungskragens 50 aufweist, wobei die beiden Wangen 46 auf ihrer Innenseite derart ausgeformt sind, dass diese an dem zweiten Stabilisatorglied 16 im Bereich des Verriegelungskragens 50 zumindest abschnittsweise anliegen. Beispielsgemäß ist der Verriegelungskragen 50 einstückiger Bestandteil des zweiten Stabilisatorglieds 16 und weist die Gestalt einer entlang der Außenseite des zweiten Stabilisatorglieds 16 ringförmig umlaufenden Ausbuchtung auf.

Wie in Fig. 1 am besten zu erkennen ist, greift der bezüglich der gemeinsamen Längsachse 14 rotationssymmetrisch ausgebildete Verriegelungskragen 50 in die in der Sperrklappe 40 ausgebildeten Ausnehmungen 48 derart ein, dass eine zwischen den beiden Stabilisatorgliedern 12 und 16 auftretende Ein- und Ausfederbewegung unterbunden wird.

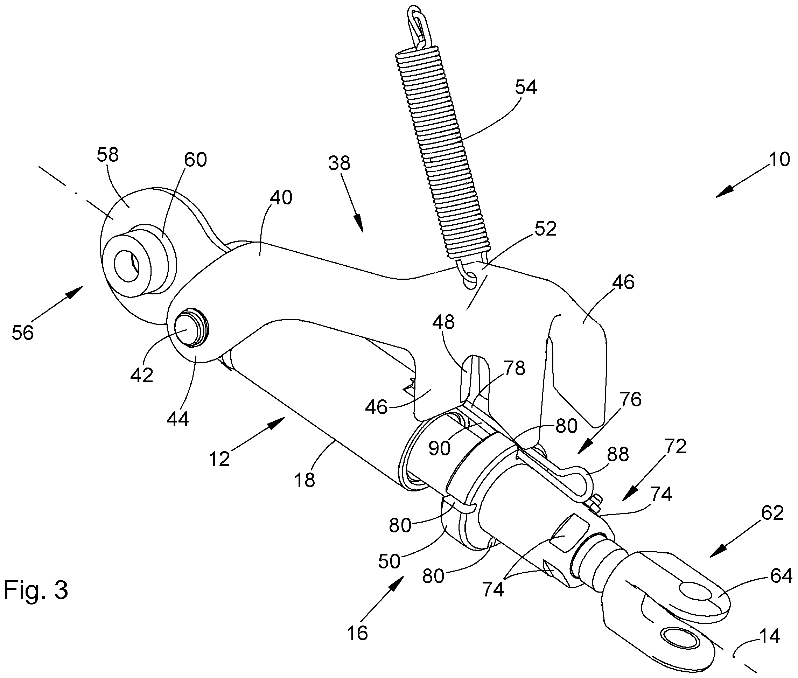

Eine an der Sperrklappe 40 angeordnete Zuglasche 52 ermöglicht ein in Fig. 3 angedeutetes Herausschwenken der Sperrklappe 40 aus der vorgegebenen Sperrstellung und damit eine Freigabe einer zwischen den beiden Stabilisatorgliedern 12 und 16 auftretenden Ein- und Ausfederbewegung. Hierzu ist die Zuglasche 52 mittels einer Spiralfeder 54 mit einer entsprechenden Befestigungsstelle am Traktor verbindbar.

Zur Herstellung einer traktorseitigen Gelenkverbindung umfasst das erste Stabilisatorglied 12 ein Kugelauge 56. Das Kugelauge 56 besteht aus einer in einem Befestigungsbereich des ersten Stabilisatorglieds 12 ausgeformten Befestigungsöse 58 sowie einer darin drehbar gelagerten Befestigungskugel 60, die eine räumliche Bewegung des Stabilisators 10 gegenüber dem Traktor erlaubt.

Weiterhin umfasst das zweite Stabilisatorglied 16 einen Befestigungsschenkel 62 zur Herstellung einer Gelenkverbindung mit einem Unterlenker eines Dreipunktgeräteanbaus. Der Befestigungsschenkel 62 weist eine an dem Unterlenker anbringbare Befestigungsgabel 64 auf, wobei die mittels der Befestigungsgabel 64 mit dem Unterlenker herstellbare Gelenkverbindung gegenüber der traktorseitigen Gelenkverbindung in montiertem Zustand derart senkrecht angelenkt ist, dass der Stabilisator 10 sowohl horizontalen als auch vertikalen Auslenkungen des Unterlenkers folgen kann.

Beispielsgemäß greift ein innerhalb des zweiten Stabilisatorglieds 16 ausgebildetes Innengewinde 66 an einem an dem Befestigungsschenkel 62 ausgebildeten Außengewinde 68 derart ein, dass der Stabilisator 10 durch Verdrehen des zweiten Stabilisatorglieds 16 gegenüber dem ersten Stabilisatorglied 12 bezüglich seiner Gesamtlänge verstellbar ist. Ein an dem zweiten Stabilisatorglied 16 vorgesehener Schmiernippel 70 erlaubt hierbei ein Abschmieren der Gewindegänge mit Lagerfett.

Zur Drehbetätigung des zweiten Stabilisatorglieds 16 ist eine Werkzeugaufnahme 72 vorgesehen. Die Werkzeugaufnahme 72 weist ein Paar von zur Aufnahme eines Maulschlüssels vorgesehene Abflachungen 74 auf. Abweichend davon kann auch eine Vielzahl weiterer derartiger Abflachungen 74 vorgesehen sein, sodass durch Umsetzen des Maulschlüssels selbst unter beengten Platzverhältnissen eine problemlose Drehbetätigung des zweiten Stabilisatorglieds 16 möglich ist.

Der Verriegelungskragen 50 sowie die Werkzeugaufnahme 72 sind einstückiger Bestandteil des zweiten Stabilisatorglieds 16. Bei dem zweiten Stabilisatorglied 16 handelt es sich - ebenso wie bei dem ersten Stabilisatorglied 12 - um ein aus einer geeigneten Stahllegierung gefertigtes Guss- oder Schmiedeteil.

Um einer unbeabsichtigten Verstellung der Gesamtlänge des Stabilisators 10 vorzubeugen, ist das zweite Stabilisatorglied 16 gegenüber dem ersten Stabilisatorglied 12 mittels eines Sicherungsmittels 76 arretierbar.

Das Sicherungsmittel 76 umfasst einen Federbügel 78, der in eine am Umfang des Verriegelungskragens 50 vorgesehene Aussparung 80 eingreift bzw. gepresst wird. Der Federbügel 78 lässt sich entgegen einer rückstellenden Federkraft von Hand aus der Aussparung 80 herausschwenken, sodass der Verriegelungskragen 50 freigegeben wird. Eine am ersten Stabilisatorglied 12 angeordnete Befestigungslasche 82 dient der Halterung des Federbügels 78. Die Befestigungslasche 82 weist zwei in Richtung der gemeinsamen Längsachse 14 beabstandete Querbohrungen 84 und 86 auf, wobei jede der beiden Querbohrungen 84 und 86 ein offenes Ende des Federbügels 78 aufnimmt.

Zur Erleichterung einer manuellen Betätigung des Federbügels 78 weist dieser an seinem freien Ende einen ösenförmig aufgeweiteten Griffbereich 88 auf. Die rückstellende Federkraft ist derart bemessen, dass einerseits eine zuverlässige Arretierung des Verrieglungskragens 50 gewährleistet ist, andererseits eine werkzeuglose Betätigung des Federbügels 78 möglich bleibt. Der Federbügel 78 ist aus einem rostfreien oder in entsprechender Weise oberflächenvergüteten Runddraht gefertigt.

Die Aussparung 80 weist die Gestalt einer schlitzförmigen Vertiefung auf, die in Richtung einer zwischen dem ersten Stabilisatorglied 12 und dem zweiten Stabilisatorglied 16 auftretenden Federbewegung orientiert ist. Die schlitzförmige Vertiefung ist derart ausgebildet, dass diese ein an dem Federbügel 78 vorgesehenes Arretiersegment 90 vollständig aufnimmt. Da der Federbügel 78 entlang der schlitzförmigen Vertiefung zu gleiten vermag, wird eine zwischen den beiden Stabilisatorgliedern 12 und 16 auftretende Federbewegung nicht behindert.

Im vorliegenden Fall ist eine Vielzahl von Aussparungen 80 entlang des Umfangs des Verriegelungskragens 50 gleichmäßig verteilt angeordnet, sodass sich die Gesamtlänge des Stabilisators 10 stufenweise verstellen und arretieren lässt.

## Patentansprüche

1. Stabilisator für einen Unterlenker eines Dreipunktgeräteanbaus eines Traktors, mit einem ersten Stabilisatorglied (12) und einem gegenüber dem ersten Stabilisatorglied (12) entlang einer gemeinsamen Längsachse (14) federnd gelagerten zweiten Stabilisatorglied (16), wobei sich die beiden Stabilisatorglieder (12, 16) zum Zwecke der Verstellung der Gesamtlänge des Stabilisators (10) in Bezug auf die gemeinsame Längsachse (14) zueinander verdrehen lassen, und wobei ein mit dem ersten Stabilisatorglied (12) verbundenes Sperrmittel (38) vorgesehen ist, das zur Einschränkung einer zwischen den beiden Stabilisatorgliedern (12, 16) auftretenden Federbewegung in eine vorgegebene Sperrstellung verbringbar ist, wobei das zweite Stabilisatorglied (16) einen bezüglich der gemeinsamen Längsachse (14) rotationssymmetrisch ausgebildeten Verriegelungskragen (50) aufweist, der bei dem in der vorgegebenen Sperrstellung befindlichen Sperrmittel (38) in eine in dem Sperrmittel (38) angeordnete Ausnehmung (48) derart eingreift, dass eine zwischen den beiden Stabilisatorgliedern (12, 16) auftretende Ein- und Ausfederbewegung unterbunden wird, wobei das zweite Stabilisatorglied (16) gegenüber dem ersten Stabilisatorglied (12) mittels eines Sicherungsmittels (76) arretierbar ist, wobei das Sicherungsmittel (76) einen Federbügel (78) umfasst, der in eine am Umfang des Verriegelungskragens (50) vorgesehene Aussparung (80) eingreift, **dadurch gekennzeichnet, dass** eine am ersten Stabilisatorglied (12) angeordnete Befestigungslasche (82) der Halterung des Federbügels (78) dient, wobei die Befestigungslasche (82) zwei in Richtung der gemeinsamen Längsachse (14) beabstandete Querbohrungen (84, 86) aufweist, von denen jede ein offenes Ende des Federbügels (78) aufnimmt.

2. Stabilisator nach Anspruch 1, **dadurch gekennzeichnet, dass** das Sperrmittel (38) als Sperrklappe (40) ausgebildet ist, wobei die Sperrklappe (40) mittels eines quer zur gemeinsamen Längsachse (14) des Stabilisators (10) verlaufenden Scharnierbolzens (42) schwenkbar mit dem ersten Stabilisatorglied (12) verbunden ist.

3. Stabilisator nach Anspruch 2, **dadurch gekennzeichnet, dass** die Sperrklappe (40) das erste Stabilisatorglied (12) in der vorgegebenen Sperrstellung zumindest teilweise umschließt.

4. Stabilisator nach einem der Ansprüche 1 bis 3, **dadurch gekennzeichnet, dass** das erste Stabilisatorglied (12) ein Kugelauge (56) zur Herstellung einer traktorseitigen Gelenkverbindung umfasst.

5. Stabilisator nach einem der Ansprüche 1 bis 4, **dadurch gekennzeichnet, dass** das zweite Stabilisatorglied (16) einen Befestigungsschenkel (62) zur Herstellung einer Gelenkverbindung mit einem Unterlenker eines Dreipunktgeräteanbaus umfasst.

6. Stabilisator nach dem Anspruch 5, **dadurch gekennzeichnet, dass** ein innerhalb des zweiten Stabilisatorglieds (16) ausgebildetes Innengewinde (66) an einem an dem Befestigungsschenkel (62) ausgebildeten Außengewinde (68) derart eingreift, dass der Stabilisator (10) durch Verdrehen des zweiten Stabilisatorglieds (16) gegenüber dem ersten Stabilisatorglied (12) bezüglich seiner Gesamtlänge verstellbar ist.

7. Stabilisator nach einem der Ansprüche 1 bis 6, **dadurch gekennzeichnet, dass** zur Drehbetätigung des zweiten Stabilisatorglieds (16) eine Werkzeugaufnahme (72) vorgesehen ist.

8. Stabilisator nach einem der Ansprüche 1 bis 7, **dadurch gekennzeichnet, dass** der Federbügel (78) an seinem freien Ende einen ösenförmig aufgeweiteten Griffbereich (88) aufweist.

9. Stabilisator nach einem der Ansprüche 1 bis 8, **dadurch gekennzeichnet, dass** die Aussparung (80) die Gestalt einer schlitzförmigen Vertiefung aufweist, die in Richtung einer zwischen dem ersten Stabilisatorglied (12) und dem zweiten Stabilisatorglied (16) auftretenden Federbewegung orientiert ist.

## Claims

1. Stabilizer for a lower link of a three-point hitch of a tractor having a first stabilizer member (12) and a second stabilizer member (16) which is resiliently supported with respect to the first stabilizer member (12) along a common longitudinal axis (14), wherein the two stabilizer members (12, 16) are able to be rotated relative to each other in order to adjust the total length of the stabilizer (10) in relation to the common longitudinal axis (14), and wherein there is provided a locking means (38) which is connected to the first stabilizer member (12) and which can be moved into a predetermined locking position in order to limit a resilient movement which occurs between the two stabilizer members (12, 16), wherein the second stabilizer member (16) has a locking collar (50) which is constructed in a rotationally symmetrical manner with respect to the common longitudinal axis (14) and which, when the locking means (38) is located in the predetermined locking position, engages in a recess (48) which is arranged in the locking means (38) in such a manner that a deflection and rebound movement which occurs between the two stabilizer members (12, 16) is prevented, wherein the second stabilizer member (16) can be secured with respect to the first stabilizer member (12) by way of a securing means (76), wherein the securing means (76) comprises a curved resilient member (78) which engages in a recess (80) which is provided on the periphery of the locking collar (50), **characterized in that** a securing flap (82) which is arranged on the first stabilizer member (12) serves to retain the curved resilient member (78), wherein the securing flap (82) has two transverse holes (84, 86) which are spaced apart in the direction of the common longitudinal axis (14), each of which receives an open end of the curved resilient member (78).

2. Stabilizer according to Claim 1, **characterized in that** the locking means (38) is constructed as a locking flap (40), wherein the locking flap (40) is pivotably connected to the first stabilizer member (12) by means of a hinge pin (42) which extends transversely relative to the common longitudinal axis (14) of the stabilizer (10) .

3. Stabilizer according to Claim 2, **characterized in that** the locking flap (40) at least partially surrounds the first stabilizer member (12) in the predetermined locking position.

4. Stabilizer according to one of Claims 1 to 3, **characterized in that** the first stabilizer member (12) comprises a spherical lug (56) in order to produce a tractor-side articulated connection.

5. Stabilizer according to one of Claims 1 to 4, **characterized in that** the second stabilizer member (16) comprises a securing member (62) for producing an articulated connection with respect to a lower link of a three-point hitch.

6. Stabilizer according to Claim 5, **characterized in that** an inner thread (66) which is formed inside the second stabilizer member (16) engages on an outer thread (68) formed on the securing member (62) in such a manner that the stabilizer (10) can be adjusted by means of rotation of the second stabilizer member (16) with respect to the first stabilizer member (12) in relation to the total length thereof.

7. Stabilizer according to one of Claims 1 to 6, **characterized in that**, in order to rotatably actuate the second stabilizer member (16), a tool receiving member (72) is provided.

8. Stabilizer according to one of Claims 1 to 7, **characterized in that** the curved resilient member (78) has at the free end thereof a gripping region (88) which widens in the manner of an eyelet.

9. Stabilizer according to one of Claims 1 to 8, **characterized in that** the recess (80) is in the form of a slot-like recess, which is orientated in the direction of a resilient movement which occurs between the first stabilizer member (12) and the second stabilizer member (16).

## Revendications

1. Stabilisateur pour une barre inférieure d'un dispositif d'attelage à trois points d'un tracteur, comprenant un premier organe stabilisateur (12) et un deuxième organe stabilisateur (16) monté sur ressort par rapport au premier organe stabilisateur (12) le long d'un axe longitudinal (14) commun, les deux organes stabilisateurs (12, 16) pouvant être tournés l'un par rapport à l'autre en vue de régler la longueur totale du stabilisateur (10) par rapport à l'axe longitudinal (14) commun, et un moyen de blocage (38) connecté au premier organe stabilisateur (12) étant prévu, lequel moyen de blocage peut être amené dans une position de blocage prédéfinie pour limiter une course de ressort se produisant entre les deux organes stabilisateurs (12, 16), le deuxième organe stabilisateur (16) comprenant un collet de verrouillage (50) présentant une symétrie de révolution par rapport à l'axe longitudinal (14) commun, lequel collet de verrouillage vient en prise dans un évidement (48) disposé dans le moyen de blocage (38) lorsque le moyen de blocage (38) se trouve dans la position de blocage prédéfinie, de telle sorte qu'un mouvement de compression et d'extension se produisant entre les deux organes stabilisateurs (12, 16) soit interrompu, le deuxième organe stabilisateur (16) pouvant être bloqué par rapport au premier organe stabilisateur (12) par le biais d'un moyen de fixation (76), le moyen de fixation (76) comportant un étrier de ressort (78) qui vient en prise dans un évidement (80) prévu sur la périphérie du collet de verrouillage (50), **caractérisé en ce qu'**une languette de fixation (82) disposée sur le premier organe stabilisateur (12) sert au support de l'étrier de ressort (78), la languette de fixation (82) comprenant deux alésages transversaux (84, 86) espacés dans la direction de l'axe longitudinal (14) commun, chacun d'entre ceux-ci recevant une extrémité ouverte de l'étrier de ressort (78).

2. Stabilisateur selon la revendication 1, **caractérisé en ce que** le moyen de blocage (38) est réalisé sous forme de clapet de blocage (40), le clapet de blocage (40) étant connecté de manière pivotante au premier organe stabilisateur (12) au moyen d'un axe de charnière (42) s'étendant transversalement à l'axe longitudinal (14) commun du stabilisateur (10).

3. Stabilisateur selon la revendication 2, **caractérisé en ce que** le clapet de blocage (40) entoure au moins en partie le premier organe stabilisateur (12) dans la position de blocage prédéfinie.

4. Stabilisateur selon l'une des revendications 1 à 3, **caractérisé en ce que** le premier organe stabilisateur (12) comporte un œillet sphérique (56) pour créer une liaison articulée du côté du tracteur.

5. Stabilisateur selon l'une quelconque des revendications 1 à 4, **caractérisé en ce que** le deuxième organe stabilisateur (16) comprend une branche de fixation (62) pour créer une liaison articulée avec une barre inférieure d'un dispositif d'attelage à trois points.

6. Stabilisateur selon la revendication 5, **caractérisé en ce qu'**un filetage interne (66) réalisé à l'intérieur du deuxième organe stabilisateur (16) vient en prise avec un filetage externe (68) réalisé sur la branche de fixation (62) de telle sorte que le stabilisateur (10) puisse être réglé en termes de sa longueur totale par rotation du deuxième organe stabilisateur (16) par rapport au premier organe stabilisateur (12).

7. Stabilisateur selon l'une des revendications 1 à 6, **caractérisé en ce qu'**un logement d'outil (72) est prévu pour l'actionnement rotatif du deuxième organe stabilisateur (16).

8. Stabilisateur selon l'une des revendications 1 à 7, **caractérisé en ce que** l'étrier de ressort (78) comprend une région de préhension (88) élargie en forme d'œillet à son extrémité libre.

9. Stabilisateur selon l'une des revendications 1 à 8, **caractérisé en ce que** l'évidement (80) présente la forme d'un renfoncement en forme de fente, qui est orienté dans la direction d'un mouvement du ressort se produisant entre le premier organe stabilisateur (12) et le deuxième organe stabilisateur (16).
